(19) Europäisches Patentamt
European Patent Office
Office européen des brevets

(11) **EP 1 743 296 B1**

(12) **EUROPEAN PATENT SPECIFICATION**

(45) Date of publication and mention
of the grant of the patent:
**13.08.2008 Bulletin 2008/33**

(51) Int Cl.:
***G06T 1/00*** (2006.01)

(21) Application number: **05718781.7**

(22) Date of filing: **21.04.2005**

(86) International application number:
**PCT/IB2005/051304**

(87) International publication number:
**WO 2005/104029 (03.11.2005 Gazette 2005/44)**

(54) **WATERMARKING A COMPRESSED INFORMATION SIGNAL**

WASSERZEICHEN FÜR EIN KOMPRIMIERTES INFORMATIONSSIGNAL

FILIGRANAGE DE SIGNAUX D'INFORMATION COMPRESSES

(84) Designated Contracting States:
**AT BE BG CH CY CZ DE DK EE ES FI FR GB GR HU IE IS IT LI LT LU MC NL PL PT RO SE SI SK TR**

(30) Priority: **27.04.2004 EP 04101751**

(43) Date of publication of application:
**17.01.2007 Bulletin 2007/03**

(73) Proprietor: **Koninklijke Philips Electronics N.V.
5621 BA Eindhoven (NL)**

(72) Inventor: **LANGELAAR, Gerrit, C.
NL-5656 AA Eindhoven (NL)**

(74) Representative: **Schmitz, Herman Jan Renier
Philips
Intellectual Property & Standards
P.O. Box 220
5600 AE Eindhoven (NL)**

(56) References cited:
**EP-A- 0 947 953**          **WO-A-02/060182**
**WO-A-20/04040913**

• **DEGUILLAUME F ET AL: "Secure hybrid robust watermarking resistant against tampering and copy attack" SIGNAL PROCESSING ELSEVIER FOR EURASIP NETHERLANDS, vol. 83, no. 10, October 2003 (2003-10), pages 2133-2170, XP004452923 ISSN: 0165-1684**
• **LANGELAAR G C ET AL: "REAL-TIME LABELING OF MPEG-2 COMPRESSED VIDEO" JOURNAL OF VISUAL COMMUNICATION AND IMAGE REPRESENTATION, ACADEMIC PRESS, INC, US, vol. 9, no. 4, December 1998 (1998-12), pages 256-270, XP000997808 ISSN: 1047-3203**

**Description**

This invention concerns a method of embedding a fragile and a robust watermark in an information signal which is compressed. A typical example of such a compressed information signal is an MPEG2 video signal in which video images are represented by transform coefficients, a significant number of which have the first value zero.

Many copy protection schemes which seek to protect digital data utilize both a robust watermark and a fragile watermark. The robust watermark is generally used to indicate that the digital content is subject to copyright or other protection. The fragile watermark is generally used to indicate whether the digital content is authentic or has been tampered with. The robust watermark is intended to survive a wide range of digital processing operations. In this way, the robust watermark will still be present even if the subject data has been processed, for example by being compressed, reformatted or transmitted via the internet or other data medium. The fragile watermark, however, is intended to 'break' easily. This means that if the subject data has been altered or tampered with, for example; by being edited or reformatted, then the fragile watermark data will be destroyed, thus indicating that the data is no longer authentic.

In prior art applications, robust and fragile watermarking algorithms are used in combination in an attempt to ensure that multimedia data processed outside its secure digital domain is prevented from re-entering the secure digital domain. In such applications, the robust watermark acts as a trigger. On detection of the triggering robust watermark, a detecting application then searches for the fragile watermark. If the fragile watermark is corrupt or missing, the application knows that the subject data has been processed. This processing could include using DIVX or recording via an analogue system (known as a legacy device). The detecting application is then able to make a decision whether or not to allow the processed data to re-enter the secure digital domain.

There are various disadvantages in having two independent watermarks for compressed multimedia data. Watermarking tends to degrade the quality of the source data, so the addition of two watermarks can lead to double degradation. The addition of a watermark can alter the quantity of data required to represent an image, sound or other object. For this reason, the watermarking process tends to require a bit-rate control mechanism. The addition of two watermarks can require a very complex bit-rate control mechanism, which can increase the processing power required by associated equipment, which inevitably impacts the complexity of such equipment, and hence its cost.

A further problem is synchronization. For instance, if the robust watermark is present it may not be possible to guarantee the presence of the fragile watermark in a compressed data stream. If the fragile watermark is missing, this may be because it has been removed by a hacker or this may be a result of the stream characteristics. For example, there may be too few coefficients presents to successfully embed a fragile watermark.

International Patent Application WO 02/060182 A1 discloses a method and arrangement for embedding a watermark in an MPEG compressed video stream. The watermark (a spatial noise pattern) is embedded by effectively discarding the smallest quantized DCT coefficients. The discarded coefficients are subsequently merged in the runs of the remaining coefficients. The decision whether a coefficient is discarded or not is made on the basis of a pre-calculated watermark buffer, together with a count of the number of already discarded coefficients in a block of DCT coefficients having a given size. This prior art document discloses the embedding of only a robust watermark.

Deguillaume F. et al.: "Secure hybrid robust watermarking resistant against tampering and copy attack", Signal Processing Elsevier for Eurasip Netherlands, Vol. 83, no. 10, October 2003, pages 2133 - 2170, ISSN: 0165-1684, discloses a method for applying a hybrid watermark to an image, said hybrid watermark consisting of a robust and a fragile or semi-fragile watermark. Firstly, a robust watermark w = winf + wref, is embedded in an image X by adding w to X in the wavelet domain, in which domain w and X are decomposed into a multi-resolution pyramid using a discrete wavelet transform. The image comprising the watermark is reconstructed from an inverse discrete wavelet transform. Secondly, the fragile watermark, wfrag, is embedded in the image after the embedding of the robust watermark. wfrag is based on a key-dependent block-wise cryptographically secure hash function derived from a key k. The resulting hash-codes are embedded as local signatures by selecting a set of least significant bits pseudo-randomly selected to embed the bits of the code.

Embodiments of the present invention aim to overcome, or at least ameliorate, the above mentioned problems experienced with prior art watermarking systems.

According to the present invention as defined in the claims there is provided a method of embedding both a robust and a fragile watermark in an information signal which is compressed so as to include first signal samples having a first given value and further signal samples having a different value, wherein embedding the robust watermark comprises the steps of:

- modifying signal samples in accordance with a watermark pattern if the act of modifying results in the modified signal sample assuming the first value; and
- embedding the fragile watermark comprises the step of altering the robust watermark such that said adjustment in the robust watermark represents the fragile watermark.

Preferably, the step of adjusting the robust watermark, includes counting the number of 'ones' remaining (R) in the signal as a result of embedding the robust watermark; and counting the number of 'ones' discarded (D) from the signal as a result of embedding the robust watermark.

Preferably, if R=0 and D=0, then there is no fragile payload.

Preferably, if R=0 and D≥1, then there is no fragile payload.

Preferably, if R≥1, D=0 and the parity of R matches the payload bit, then there is a valid fragile payload.

Preferably, if R≥2, D=0 and the parity of R does not match the payload bit, then the last 'one' is merged and there is a valid fragile payload.

Preferably, if R=1, D=0 and the parity of R does not match the payload bit, then the last 'one' is merged and there is no fragile payload.

Preferably, if R≥1, D≥1 and the parity of R matches the payload bit, then there is a valid fragile payload.

Preferably, if R≥1, D≥1 and the parity of R does not match the payload bit, the last performed merge is undone and there is a valid fragile payload.

Preferably, the fragile watermark comprises a hash value calculated on the basis of the content of a previous data frame. In the case of the first frame, a hash value of zero is assumed.

According to a second aspect of the present invention, there is provided a method of determining whether a compressed data signal is authentic by comparing an extracted fragile watermark with an expected value, and determining that the compressed data signal is inauthentic if the expected value and the extracted value differ.

Preferably, the expected value is equal to a hash value of a previous data frame.

Preferably, apparatus arranged to perform the method in accordance with embodiments of the invention is provided.

Embodiments of the present invention advantageously provide a watermarking system which enables both robust and fragile watermarks to be embedded in a compressed data signal, without experiencing the problems of excessive data degradation and resynchronization common in prior art watermarking systems.

For a better understanding of the present invention, and to understand how the same may be brought into effect, the invention will be described, by way of example only, with reference to the appended drawings in which:

Fig. 1 shows a schematic of an arrangement for carrying out the method according to an embodiment of the invention;
Figs. 2a-2c and 3a-3g illustrate the operation of embodiments of the invention; and
Fig. 4 illustrates a preferred embodiment of the watermark-embedding process.

Embodiments of the present invention utilize certain features of the invention disclosed in International Patent Application WO 02/060182 A1, referred to above. Understanding of embodiments of the present invention can be enhanced by studying certain features of the above-mentioned document. In particular, it discloses an algorithm which may be applied to compressed MPEG data in order to embed a robust watermark.

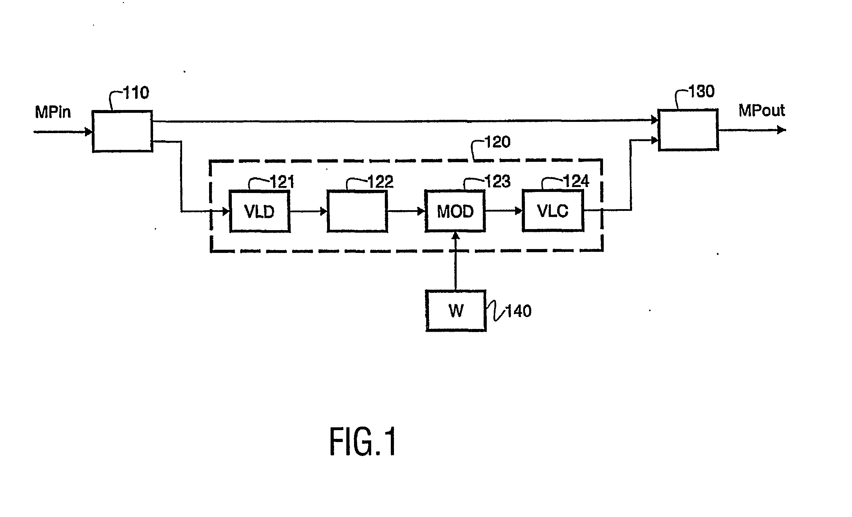

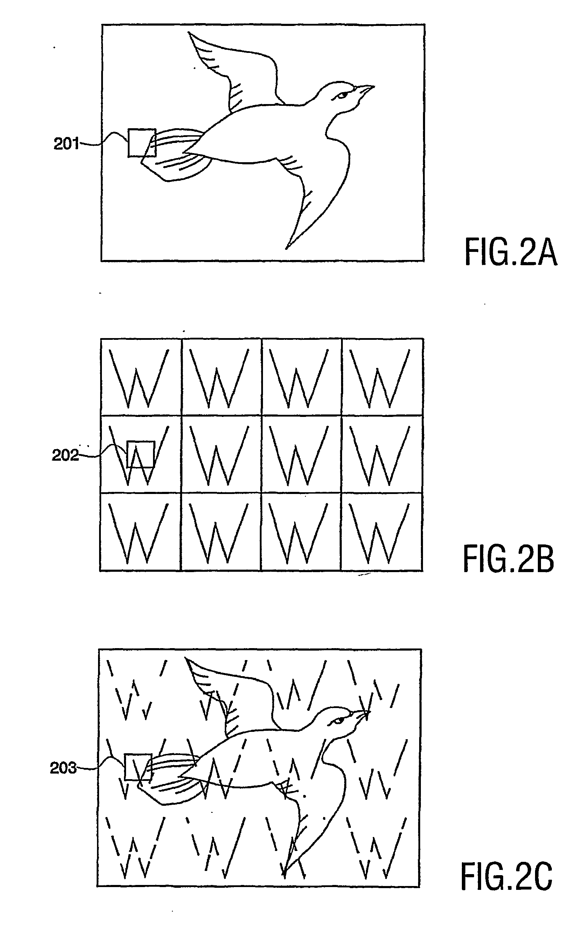

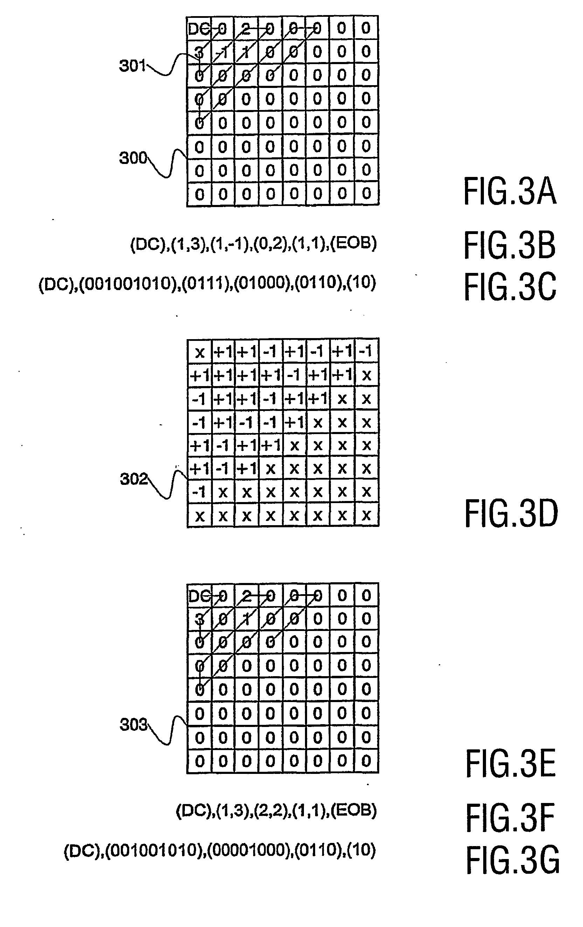

Fig. 1 shows a schematic diagram of an arrangement carrying out a method of embedding a robust watermark in accordance with the above-mentioned document. The arrangement comprises a parsing unit 110, a VLC processing unit 120, an output stage 130, and a watermark buffer 140. Its operation will be further described with reference to Figs. 2A-2C and 3A-3G.

The arrangement receives an MPEG elementary video stream MPin which represents a sequence of video images. One such video image is shown in Fig. 2A by way of illustrative example. The video images are divided into blocks of 8x8 pixels, one of which blocks is denoted 201 in Fig. 2A. The pixel blocks are represented by respective blocks of 8x8 DCT (Discrete Cosine Transform) coefficients. The upper left transform coefficient of such a DCT block represents the average luminance of the corresponding pixel block and is commonly referred to as the DC coefficient. The other coefficients represent spatial frequencies and are referred to as AC coefficients. The upper left AC coefficients represent coarse details of the image, the lower right coefficients represent fine details. The AC coefficients have been quantized. The quantization process causes many AC coefficients of a DCT block to assume the value zero. Fig. 3A shows a typical example of a DCT block 300, corresponding to the pixel block in Fig. 2A.

The coefficients of the DCT block have been sequentially scanned in accordance with a zig-zag pattern (301 in Fig. 3A) and variable length encoded. The variable length encoding scheme is a combination of Huffman coding and run-length coding. More particularly, each run of zero AC coefficients and a subsequent non-zero AC coefficient constitutes a run-level pair which is encoded into a signal variable length code word. Fig. 3B shows the run-level pairs of the DCT block 300. An end of block code (EOB) denotes the absence of further non-zero coefficients in the DCT block. Fig. 3C shows the series of variable length code words representing DCT block 300 as received by the arrangement.

In an MPEG2 elementary video stream, four such DCT luminance blocks and two DCT chrominance blocks constitute a macro block, a number of macro blocks constitutes a slice, a number of slices constitutes a picture (field or frame) and a series of pictures constitutes a video sequence. Some pictures are autonomously encoded (I-pictures), other pictures are predictably coded with motion compensation (P-pictures and B-pictures). In the latter case, the DCT coefficients represent differences between pixels of the current picture and pixels of a reference picture, rather than the pixels themselves. The MPEG2 elementary video stream MPin is applied to the parsing unit 110. This parsing unit partially interprets the MPEG bit-stream and splits the stream into variable length code words representing luminance DCT coefficients (hereinafter: VLCs) and other MPEG codes. The unit also gathers information such as the coordinates of the blocks, the coding type (field or frame), the scan type (zig-zag or alternate). The VLCs and associated information are supplied to the - VLC processing unit 120. The other MPEG codes are directly applied to the output stage 130.

The robust watermark to be embedded is a pseudo random noise sequence in the spatial domain. In this embodiment of the arrangement, a 128x128 basic watermark pattern is "tiled" over the extent of the image. This operation is illustrated in Fig. 2B. The 128x128 basic pseudo random watermark pattern is herein represented by a symbol W for better visualization. The spatial pixel values of the basic watermark are transformed to the same representation as the video content in the MPEG stream. To this end, the 128x128 basic watermark pattern is divided into 8x8 blocks, one of which is denoted 202 in Fig. 2B. The blocks are discrete cosine transformed and quantized. Note that the transform and quantizing operation needs to be done only once. The DCT coefficients as calculated are stored in the 128x128 watermark buffer 140 of the arrangement. The watermark buffer 140 is connected to the VLC processing unit 120, in which the actual embedding of the robust watermark takes place. The VLC processing unit decodes (121) selected variable length codes representing the video image into run-level pairs, and converts (122) the series of run-level pairs into a two dimensional array of 8x8 DCT coefficients. The robust watermark is embedded, in the modification stage 123, by adding to each video DCT block the spatially corresponding watermark DCT block. The DCT block representing watermark block 202 in Fig. 2B is thus added to the DCT block representing image block 201 in Fig. 2A. However, in accordance with a preferred method of the above-mentioned disclosure, only DCT coefficients that are turned into zero coefficients by this operation are selected for the purpose of watermarking. For example, the AC coefficient having the value 2 in Fig. 3A will be modified only if the corresponding watermark coefficient has the value -2. In mathematical notation:

$$\text{if } c_{in}(i,j) + w(i,j) = 0$$

then $c_{out}(i,j) = 0$
else $c_{out}(i,j) = c_{in}(i,j)$
where $c_{in}$ is a coefficient of a video DCT block, W is a coefficient of the spatially corresponding watermark DCT block, and $c_{out}$ is a coefficient of the watermark to video DCT block.

It will be appreciated that the number of zero coefficients in the DCT block is increased by this operation, so that the watermarked video DCT block can be more efficiently encoded than the original DCT block. This is particularly the case for MPEG compressed signals, because the new zero co-efficient will be included in the run of another-run-level pair (run-merge). The re-encoding is performed by a variable length encoder 124. The watermark block is applied to the output stage 130, which re-generates the MPEG stream by copying the MPEG codes provided by the parsing unit 110 and inserting regenerated VLCs provided by the VLC processing unit 120. Furthermore the output stage 130 may insert stuffing bits to make the output bit-rate equal to the original video bit rate.

In a particular variant disclosed in the above-mentioned document, only the signs of the DCT coefficients of the watermark pattern are stored in the watermark buffer 140, so that the buffer stores +1 and -1 values only. This reduces the memory capacity of the buffer to 1 bit per coefficient (128x128 bits in total). Moreover, the above-mentioned document discloses that it is sufficient to apply robust watermark embedding to the most significant DCT coefficients only (the most significant coefficients are the ones occurring first in the zig-zag scan). This reduces the memory requirements even further. Fig. 3D shows a typical example of the watermark DCT block 302 corresponding to the spatial watermark block 202 in Fig. 2B.

Fig. 3E shows a watermarked video DCT block 303 obtained by addition of watermark DCT block 302 to a video DCT block 300. In this specific example only one of the non-zero coefficients (the one with the value -1 in Fig. 3A) is turned into a zero coefficient, because the spatially corresponding watermark coefficients have the value +1. Fig. 3F shows the run-level pairs of the watermarked DCT block. Note that the former run-level pairs (1, -1) and (0, 2,) have been replaced by one run-level pair (2, 2). Fig. 3G shows the corresponding output bit-stream. The run merge operation appears to save one bit in this particular example.

Fig. 2C shows the watermarked image represented by the output signal MPout of the arrangement. The pixel block denoted 203 in this figure corresponds to the watermarked video DCT block 303 in Fig. 3E. Fig. 2C demonstrates the different level of robust watermark embedding by the different format of the W character which is tiled over the original image.

The above-mentioned document also discloses several variations which may be made to the arrangement disclosed to achieve various desirable effects. One particular variant is that a given range of negative DCT coefficients (for example, -2 and -1) are turned into zeros by the watermark coefficient value +1, whereas a range of positive DCT coefficients (for example +2 and +1) are turned into zeros by watermark coefficient value -1. In this way, a system designer may choose to make various compromises with the system according to particular requirements.

Furthermore, MPEG2 elementary video stream data may be field coded or frame coded. The above-mentioned documents states that the watermark buffer 150 may be arranged to contain two different watermark patterns, one for field coded blocks and one for frame coded blocks. The pattern then used for embedding the robust watermark is selected according to a suitable identification signal included in the input video stream.

In the above described arrangement for embedding a robust watermark in an MPEG encoded signal, the "level" part of run-level pairs is changed. However, a level is not an actual value of an AC coefficient, but a quantized version thereof. For example, the run-level pair (1, -1) in Fig. 3B may in fact represent a coefficient X=-104. In another block, the same pair (1,-1) may represent a coefficient X=-6, depending on the quantizer step size. Needless to say that the effect of turning an AC coefficient from -104 into zero will generally have a different effect on the perceptibility of the embedded robust watermark, than turning the same AC coefficient from -6 into zero.

There may thus be a need to control the robust watermark embedding process such that the effect thereof on visibility is reduced. To this end, a further variation in the prior art embedding method includes the step of controlling the number and/or positions of coefficients being modified in dependence upon the quantizer step size.

In an MPEG decoder, inverse quantization is achieved by multiplying the receive level X(n) with the quantizer step size. The quantizer step size is controlled by a weighting matrix W(n) which modifies the step size within a block, and a scale factor QS which modifies the step size from (macro-) block to (macro-) block. The following equation specifies MPEG's arithmetic to reconstruct an AC coefficient X(n) from the decoded level x(n):

$$X(n) = x(n) \times W(n) \times QS$$

where n denotes the index in order of the zig-zag scan.

There are various ways to generate an upper bound for the number of coefficients that are allowed to be modified. In one embodiment, a level, x(n), may only be modified if the corresponding quantizing step size :

$$Q(n) = W(n) \times QS$$

is less than the predetermined threshold. Different thresholds may thereby be used for different positions in a DCT block (i.e. for different indexes n).

In another variant of the above-mentioned prior art document, the maximum number N of coefficients that are allowed to be modified in a block is a function of the quantizer scale factor QS such that N decreases as QS increases. The feasibility of this technique can easily be understood if one realizes that the scale factor in fact indicates how strongly a DCT block has been quantized. The larger the scale factor, i.e. the larger the quantization step size, the fewer coefficients may be changed in order to render the effect imperceptible. An example of such a function is:

$$N = \frac{c}{QS}$$

where is c is a given constant value.

The quantizer scale factor QS is accommodated in MPEG bit-streams as a combination of a parameter *quantizer_scale_code* and a parameter *Q_scale_type.* The parameter *quantizer_scale_code* is a five bit code. The parameter *Q_scale_type* indicates where the said code represents a linear range of QS values between 2 and 62, or an exponential range of values between 1 and 112. In both cases, the code is indicative of the step size. Accordingly, the term QS in the above-mentioned function may also be replaced by the parameter *quantizer_scale_code.*

The above description of the prior art document WO 02/060182 has been included in order to give an appreciation and understanding of the embedding of a robust watermark through use of what is termed the run-merge algorithm. Embodiments of the present invention are based on modifications and enhancements of the methods and apparatus disclosed in this document.

The embodiments of the present invention are able to embed a robust and a fragile watermark simultaneously in one processing step. The prior art method of embedding a robust watermark, described in detail above, effectively operates by selectively reducing the number of coefficients with an absolute value equal to 1. Embodiments of the present invention exploit this technique to embed a second fragile watermark by interpreting the remaining ones in a particular way.

In a particular embodiment of the present invention, each data frame is divided into, for instance, 32 parts, where each part holds one fragile payload bit. (In the D1 PAL system this means that each part contains about 200 8x8 blocks). The algorithm used to embed the fragile watermark is operable to force the presence of an even or an odd number of ones during the run-merge processing stage dependent upon the fragile payload data that has to be embedded. If the number of ones is even, this means that the fragile payload bit is equal to zero. If the number of ones is odd, this means that the fragile payload bit is equal to one. If there are no remaining ones, then that particular part does not contain a fragile payload bit.

It is important to note that this method of embedding a fragile watermark is not easily circumvented by a hacker or other person wishing to tamper with the data. For instance, it is not possible to remove all coefficients equal to 1. This is because coefficients with an absolute value of 1 are the most frequently occurring coefficients in MPEG data streams. Any attempt to remove them all would render the data stream useless.

Embodiments of the present invention embed a hash value, calculated by known techniques, of a previous watermarked frame into the present watermarked frame so that the hash value acts as a fragile payload. A 32 bit hash value is calculated over the VLCs representing the DCT coefficients for a particular watermarked frame. The first bits of this 32 bit value are then stored in the fragile payload of the next frame. In certain circumstances, e.g. with heavily compressed streams, it might not be possible to store all 32 bits. If this is the case, it is sufficient to store only part of the hash values in order to detect changes to watermarked data. Since there is no frame preceding the very first frame, the fragile payload of the very first frame is set to zero.

A schematic representation of an arrangement suitable for performing a method in accordance with embodiments of the present invention is disclosed in Fig. 1. This arrangement is identical in form with that previously described in relation to the prior art. The differences lie in the nature of the watermark buffer 140 and modifying block 123. The modifying block 123 operated in the prior art arrangement to embed a robust watermark according to a particular run-merge algorithm. In embodiments of the present invention, the run-merge algorithm is adapted in order to embed a fragile watermark in addition to the robust watermark.

Each received data frame is divided into 32 parts. Each of these 32 parts is then watermarked with a robust watermark using the prior art run-merge algorithm. The embedder 123 performs a count of the remaining ones, R, and the number of discarded ones, D. These two counts control the nature of the fragile watermark payload. In addition, the embedder 123 is able to undo the last merge performed and can merge a last arbitrary one regardless of its corresponding coefficient in the DCT transformed watermarked pattern. At the end of each part (e.g. after 200 8x8 blocks), the embedder 123 performs the following actions as set out in the table below.

| R | D | Action of Embedder | Resulting Fragile Payload |
|---|---|---|---|
| R=0 | D=0 | None | No payload |
| R=0 | D≥1 | | No payload |
| R≥1 | D=0 | | |
| | | If parity(R) doesn't match payload bit AND R≥2, then merge last 'one' | |
| | | If parity(R) doesn't match payload bit AND R=1, then merge last 'one' | |
| R≥1 | D≥1 | If parity(R) matches payload bit, then no action | Valid payload |
| | | If parity(R) doesn't match payload bit, then undo last merge | Valid payload |

For example, in the case where the embedder finds one or more remaining 'ones' (R) and no discarded ones (D), then a further check is performed which compares the parity ofR to the payload bit. The above table indicates three possible outcomes depending on the value of R and the parity comparison.

In order to detect the robust and fragile watermarks after they have been embedded, different techniques may be used. The robust watermark may be detected in a base band domain by a correlation detector. As has been stated already, the robust watermark is intended to survive a variety of different processing steps and its detection will act as a trigger for a detector to seek out the fragile watermark. The fragile watermark can only be detected in the digital compressed domain.

The fragile payload of up to 32 bits may be extracted by counting the number of coefficients with an absolute value of 1 per part (200 8x8 blocks). The parity of this number determines the fragile payload bit. If the number of ones is zero, there is no payload in the corresponding 200 blocks. While the fragile payload is extracted from the compressed data, the hash value of the frame is calculated from the DCT coefficients. At the end of the " frame, the previously calculated hash value is compared with the extracted payload. If the values match, this means that the fragile watermark is intact, and the watermarked data may be considered to be authentic or not tampered with. If, however, there is no match, the detector is able to signal that the fragile watermark is broken, meaning that the fragile watermarked data has been processed in some way after the original watermark was embedded. Some other application may then use this information to decide how to treat this data which may be inauthentic.

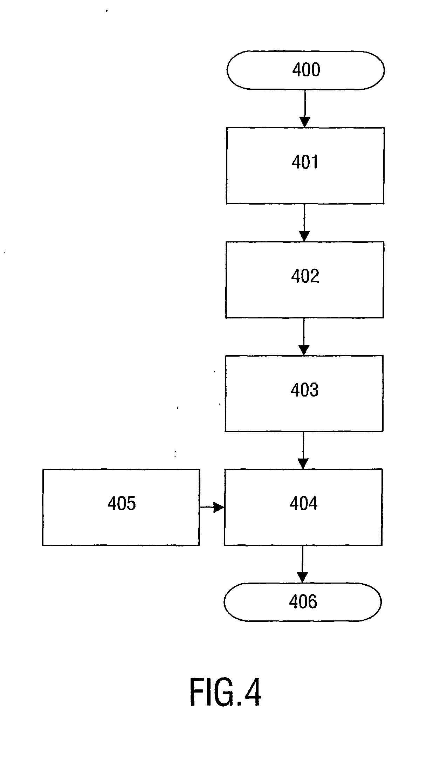

Fig. 4 illustrates the modified process occurring in block 123. The watermarking process starts at 400. The robust watermark is embedded as described at 401. The number (R) of 'ones' remaining following that process are counted at step 402. The number (D) of discarded 'ones' are counted at step 403.

Using the values of R and D so counted, the fragile payload is embedded at step 404 using the hash value 405 of the previous data frame.

The watermarking process ends at step 406, but may, of course, be repeated as many times as necessary.

Although described with particular reference to a preferred embodiment, the skilled reader will realize that other schemes may be adopted which cause the embedded robust watermark to be altered to represent a fragile watermark, and that the scheme herein disclosed is exemplary only.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of embedding both a robust and a fragile watermark during a run-merge operation into a first frame of an information signal which is compressed so as to include first signal samples having a first given value and further signal samples having a different value, wherein said signal samples represent spatial frequencies and wherein embedding the robust watermark in the first frame comprises the step of modifying signal samples (300) in accordance with a watermark pattern (302) if the act of modifying results in the modified signal sample (303) assuming the first value, and wherein embedding the fragile watermark in the first frame comprises the steps of:

   - counting the number R of 'ones' remaining in the signal samples as a result of embedding the robust watermark in the run-merge operation; and counting the number D of 'ones' discarded from the signal samples as a result of embedding the robust watermark in the run-merge operation;
   - calculating a fragile payload based on a second frame;
   - merging a number of bits from the fragile payload into the robust watermark of said first frame, wherein the number of bits merged is based on the count of remaining 'ones' and the count of discarded 'ones'.

2. A method as claimed in claim 1 wherein if R=0 and D=0, then there is no fragile payload.

3. A method as claimed in claim 1 or 2 wherein if R=0 and D≥1, then there is no fragile payload.

4. A method as claimed in any one of claims 1 to 3 wherein if R≥1, D=0 and the parity of R matches the payload bit, then there is a valid fragile payload.

5. A method as claimed in any one of claims 1 to 4 wherein if R≥2, D=0 and the parity of R does not match the payload bit, then the last 'one' is merged and there is a valid fragile payload.

6. A method as claimed in any one of claims 1 to 5 wherein if R=1, D=0 and the parity of R does not match the payload bit, then the last 'one' is merged and there is no fragile payload.

**7.** A method as claimed in any one of claims 1 to 6 wherein if R≥1, D≥1 and the parity of R matches the payload bit, then there is a valid fragile payload.

**8.** A method as claimed in any one of claims 1 to 7 wherein if R≥1, D≥1 and the parity of R does not match the payload bit, the last performed merge is undone and there is a valid fragile payload.

**9.** A method as claimed in any one of the preceding claims wherein the fragile watermark comprises a hash value of a previous data frame.

**10.** A method as claimed in claim 9 wherein for a first data frame, a fragile watermark having a value of zero is embedded.

**11.** A method of determining whether a first frame of a compressed data signal is authentic by

- detecting whether a robust watermark is present in the first frame using a correlation detector; and if a robust watermark is detected then performing the steps of
- dividing the first frame in to a number of parts;
- counting a number of coefficients with an absolute value of 'one' in each part of the first frame to generate a payload of the first frame;
- calculating a fragile payload based on a second frame;
- comparing the payload of the first frame with the fragile payload of the second frame, and determining that the compressed data signal is authentic if the payload of the first frame and the fragile payload of the second frame match.

**12.** A method as claimed in claim 11 wherein the fragile payload of the second frame is equal to a hash value of a frame preceding the first frame.

**13.** Apparatus arranged to perform the method according to any one of the preceding claims.

**Patentansprüche**

**1.** Verfahren zum Einbetten eines starken und eines schwachen Wasserzeichens während eines Mischdurchlaufs in ein erstes Frame eines komprimierten Informationssignals, um erste Signalabtastwerte mit einem ersten bestimmten Wert, und weitere Signalabtastwerte mit einem anderen Wert einzuschließen, wobei die genannten Signalabtastwerte räumliche Frequenz darstellen und wobei das Einbetten des starken Wasserzeichens in das erste Frame den Verfahrensschritt der Modifizierung von Signalabtastwerten (300) entsprechend einem Wasserzeichenmuster (302) umfasst, wenn der Vorgang der Modifikation zu einem modifizierten Signalabtastwert (303) führt, wobei der erste Wert vorausgesetzt wird, und wobei das Einbetten des schwachen Wasserzeichens in das erste Frame die nachfolgenden Verfahrensschritte umfasst:

- das Zählen der Anzahl R "Einsen", die in den Signalabtastwerten als Ergebnis der Einbettung des starken Wasserzeichens in dem Mischdurchlauf zurückbleiben; und
- das Zählen der Anzahl D "Einsen", weggeworfen aus den Signalabtastwerten als Ergebnis der Einbettung des starken Wasserzeichens in dem Mischdurchlauf;
- das Berechnen einer schwachen Ladung auf Basis eines zweiten Frames;
- das Mischen einer Anzahl Bits aus der schwachen Ladung in das starke Wasserzeichen des genannten ersten Frames, wobei die Anzahl gemischter Bits auf der Zählung restlicher "Einsen" und der Zählung weggeworfener "Einsen" basiert.

**2.** Verfahren nach Anspruch 1, wobei es, wenn R=0 und D=0 ist, keine schwache Ladung gibt.

**3.** Verfahren nach Anspruch 1 oder 2, wobei es, wenn R=0 und D ≥1 ist, keine schwache Ladung gibt.

**4.** Verfahren nach einem der Ansprüche 1 bis 3, wobei es, wenn R ≥1, D=0 ist, und die Parität von R mit dem Ladungsbit übereinstimmt, eine gültige schwache Ladung gibt.

**5.** Verfahren nach einem der Ansprüche 1 bis 4, wobei, wenn R ≥2, D=0 ist, und die Parität von R nicht mit dem Ladungsbit übereinstimmt, das letzte "Eins" gemischt wird und dass es eine gültige schwache Ladung gibt.

6. Verfahren nach einem der Ansprüche 1 bis 5, wobei, wenn R=1, D=0 ist, und die Parität von R nicht mit dem Ladungsbit übereinstimmt, das letzte "Eins" gemischt wird und dass es keine schwache Ladung gibt.

7. Verfahren nach einem der Ansprüche 1 bis 6, wobei es, wenn R ≥1, D ≥1 ist, und die Parität von R mit dem Ladungsbit übereinstimmt, eine gültige schwache Ladung gibt.

8. Verfahren nach einem der Ansprüche 1 bis 7, wobei, wenn R ≥1, D ≥1 ist, und die Parität von R nicht mit dem Ladungsbit übereinstimmt, die zuletzt durchgeführte Mischung rückgängig gemacht wird und dass es eine gültige schwache Ladung gibt.

9. Verfahren nach einem der vorstehenden Ansprüche, wobei das schwache Wasserzeichen einen Hashwert eines vorhergehenden Datenframes aufweist.

10. Verfahren nach Anspruch 9, wobei für ein erstes Datenframe ein schwaches Wasserzeichen mit einem Wert Null eingebettet wird.

11. Verfahren um zu ermitteln, ob ein erstes Frame eines komprimierten Datensignals **dadurch** authentisch ist, indem

- detektiert wird, ob ein starkes Wasserzeichen in dem ersten Frame vorhanden ist, und zwar unter Verwendung eines Korrelationsdetektors; und dass, wenn ein starkes Wasserzeichen detektiert wird, die nachfolgenden Verfahrensschritte durchgeführt werden:
- das Aufteilen des ersten Frames in eine Anzahl Teile,
- das Zählen einer Anzahl Koeffizienten mit einem Absolutwert "Eins" in jedem Teil des ersten Frames zum Erzeugen einer Ladung des ersten Frames,
- das Berechnen einer schwachen Ladung auf Basis eines zweiten Frames,
- das Vergleichen der Ladung des ersten Frames mit der schwachen Ladung des zweiten Frames,

und Ermittlung, dass das komprimierte Datensignal authentisch ist, wenn die Ladung des ersten Frames und die schwache Ladung des zweiten Frames übereinstimmen.

12. Verfahren nach Anspruch 11, wobei die schwache Ladung des zweiten Frames dem Hashwert eines dem ersten Frame vorhergehenden Frames entspricht.

13. Anordnung zum Durchführen des Verfahrens nach einem der vorstehenden Ansprüche.


**Revendications**

1. Procédé d'intégration à la fois d'un filigrane robuste et d'un filigrane fragile lors d'une opération d'exécution-fusion dans une première trame d'un signal d'information qui est comprimé de manière à inclure des premiers échantillons de signal ayant une première valeur donnée et des échantillons de signal supplémentaires ayant une valeur différente, dans lequel lesdits échantillons de signal représentent des fréquences spatiales et dans lequel l'intégration du filigrane robuste dans la première trame comprend l'étape de modification des échantillons de signal (300) selon un motif de filigrane (302) si l'action de modification a pour conséquence que l'échantillon de signal modifié (303) prend la première valeur, et dans lequel l'intégration du filigrane fragile dans la première trame comprend les étapes suivantes :

- le comptage du nombre R de "uns" restant dans les échantillons de signal à la suite de l'intégration du filigrane robuste lors de l'opération d'exécution-fusion, et le comptage du nombre D de "uns" éliminés des échantillons de signal à la suite de l'intégration du filigrane robuste lors de l'opération d'exécution-fusion;
- le calcul de données utiles fragiles sur la base d'une deuxième trame;
- la fusion d'un certain nombre de bits venant des données utiles fragiles dans le filigrane robuste de ladite première trame, dans lequel le nombre de bits fusionnés est basé sur le compte de "uns" restants et le compte de "uns" éliminés.

2. Procédé suivant la revendication 1, dans lequel si R=0 et D=0, alors il n'y a pas de données utiles fragiles.

3. Procédé suivant la revendication 1 ou 2, dans lequel si R=0 et D≥1, alors il n'y a pas de données utiles fragiles.

**4.** Procédé suivant l'une quelconque des revendications 1 à 3, dans lequel si R≥1, D=0 et la parité de R correspond au bit de données utiles, alors il y a des données utiles fragiles.

**5.** Procédé suivant l'une quelconque des revendications 1 à 4, dans lequel si R≥2, D=0 et la parité de R ne correspond pas au bit de données utiles, alors le dernier "un" est fusionné et il y a des données utiles fragiles valables.

**6.** Procédé suivant l'une quelconque des revendications 1 à 5, dans lequel si R=1, D=0 et la parité de R ne correspond pas au bit de données utiles, alors le dernier "un" est fusionné et il n'y a pas de données utiles fragiles.

**7.** Procédé suivant l'une quelconque des revendications 1 à 6, dans lequel si R≥1, D≥1 et la parité de R correspond au bit de données utiles, alors il y a des données utiles fragiles valables.

**8.** Procédé suivant l'une quelconque des revendications 1 à 7, dans lequel si R≥1, D≥1 et la parité de R ne correspond pas au bit de données utiles, la fusion exécutée en dernier est annulée et il y a des données utiles fragiles valables.

**9.** Procédé suivant l'une quelconque des revendications précédentes, dans lequel le filigrane fragile comprend une valeur de hachage d'une trame de données antérieure.

**10.** Procédé suivant la revendication 9, dans lequel pour une première trame de données, un filigrane fragile ayant une valeur de zéro est intégré.

**11.** Procédé permettant de déterminer si une première trame d'un signal de données comprimé est authentique en

- détectant si un filigrane robuste est présent dans la première trame en utilisant un détecteur de corrélation, et si un filigrane robuste est détecté, alors en exécutant les étapes suivantes de
- division de la première trame en un certain nombre de parties;
- comptage du nombre de coefficients ayant une valeur absolue de "un" dans chaque partie de la première trame pour générer des données utiles de la première trame;
- calcul de données utiles fragiles sur la base d'une deuxième trame;
- comparaison des données utiles de la première trame aux données utiles fragiles de la deuxième trame, et la détermination du fait que le signal de données comprimé est authentique si les données utiles de la première trame et les données utiles fragiles de la deuxième trame correspondent.

**12.** Procédé suivant la revendication 11, dans lequel les données utiles fragiles de la deuxième trame sont égales à une valeur de hachage d'une trame précédant la première trame.

**13.** Appareil à même d'exécuter le procédé suivant l'une quelconque des revendications précédentes.

FIG.1

201

FIG.2A

202

FIG.2B

203

FIG.2C

**FIG.3A**

**FIG.3B**

**FIG.3C**

(DC),(1,3),(1,-1),(0,2),(1,1),(EOB)

(DC),(001001010),(0111),(01000),(0110),(10)

**FIG.3D**

**FIG.3E**

**FIG.3F**

**FIG.3G**

(DC),(1,3),(2,2),(1,1),(EOB)

(DC),(001001010),(00001000),(0110),(10)

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 02060182 A1

- WO 02060182 A

### Non-patent literature cited in the description

- Secure hybrid robust watermarking resistant against tampering and copy attack. **DEGUILLAUME F. et al.** Signal Processing. Elsevier for Eurasip Netherlands, October 2003, vol. 83, 2133-2170